# EUROPEAN PATENT APPLICATION

(11) **EP 3 932 711 A1**
(43) Date of publication of application: **05.01.2022**
(21) Application number: 21181732.5
(22) Date of filing: 25.06.2021
(51) Int. Cl.: B60J 7/22

(54) **UPPER VEHICLE-BODY STRUCTURE FOR VEHICLE**

(30) Priority: 01.07.2020 JP 2020114226
(71) Applicant: MAZDA MOTOR CORPORATION, Hiroshima 730-8670 (JP)
(72) Inventor: Shigyou, Yasuyuki, Aki-gun, Hiroshima, 730-8670 (JP); Hiasa, Kazuhiko, Aki-gun, Hiroshima, 730-8670 (JP); Koibuchi, Tatsuo, Aki-gun, Hiroshima, 730-8670 (JP); Murakami, Kenta, Aki-gun, Hiroshima, 730-8670 (JP); Tanita, Yuna, Aki-gun, Hiroshima, 730-8670 (JP); Kishimoto, Junji, Aki-gun, Hiroshima, 730-8670 (JP)
(74) Representative: Herrmann, Uwe

(57) **Abstract**

In an upper vehicle-body structure for a vehicle V including a roof opening-closing unit 10 which has a glass panel 11 being capable of opening and closing an opening 2a formed in a roof panel 2 and a deflector 20a which is extended in a vehicle width direction along a front end edge portion of the roof opening-closing unit 10 and is shifted to an upper position than the opening 2a when an opening operation of the glass panel 11 is performed, the deflector 20a has plural raised walls 21 and plural recesses 22 each extending in a front-rear direction, and blocking wall portions 22c having generally same height dimensions as the raised walls 21 and being formed in a rear-side upward-inclined shape which is shifted upward toward a rear side are respectively provided in rear end portions of the plural recesses 22.

## Description

### [Technical Field]

The present invention relates to an upper vehicle-body structure for a vehicle, particularly to an upper vehicle-body structure for a vehicle which includes a deflector to be shifted to an upper side position when an opening operation of a cover member of a roof opening-closing unit is performed.

### [Background Art]

Conventionally, a roof opening-closing unit (sunroof unit) has been known which has a glass panel (cover member) being capable of opening and closing a generally rectangular opening formed in a roof panel of a vehicle.

In a planar view, this roof opening-closing unit has a unit framework member in a generally rectangular shape, the unit framework member being composed of a pair of left and right side frames, a front-side member coupling front end portions of the pair of side frames together in a vehicle width direction, and a rear-side member coupling rear end portions of the pair of side frames together in the vehicle width direction, and is installed in a vehicle body via this unit framework member.

When a vehicle including the roof opening-closing unit travels in a state where the glass panel is opened, an airflow along a roof is drawn into a cabin, a vortex flow thus occurs. The occurring vortex flow contacts with a rear-side edge portion of the opening, periodicity of the vortex flow is thereby increased, and an unpleasant vibration sound at a low frequency, a so-called wind throb sound occurs. A structure has been known in which in order to inhibit this, a deflector blade (hereinafter, referred to as deflector) protruding from a roof upper surface is provided along a front end edge portion of the roof opening-closing unit, but a deflector in a simple bar shape provides a small effect of inhibiting a throbbing sound.

Accordingly, a technique has been suggested which diffuses a vortex flow as a cause of occurrence of a throbbing sound.

A sunroof device of Patent Literature 1 includes a roof opening-closing unit which has a glass panel being capable of opening and closing an opening formed in a roof panel and a deflector which extends in a vehicle width direction along a front end edge portion of this roof opening-closing unit and is shifted to an upper position than the opening when an opening operation of the glass panel is performed, and this deflector is provided with plural projections each extending in a vehicle front-rear direction and plural recesses neighboring those projections.

### [Citation List]

### [Patent Literature]

[Patent Literature 1] Japanese Patent Laid-Open No. 2013-216237

### [Summary of Invention]

### [Problems to be Solved by the Invention]

A sunroof device of Patent Literature 1 diffuses a vortex flow by disturbing an airflow flowing along a front wall portion of a deflector, inhibits periodicity of the vortex flow, and thereby reduces a throbbing sound.

However, the technique of Patent Literature 1 might impair designability of a vehicle.

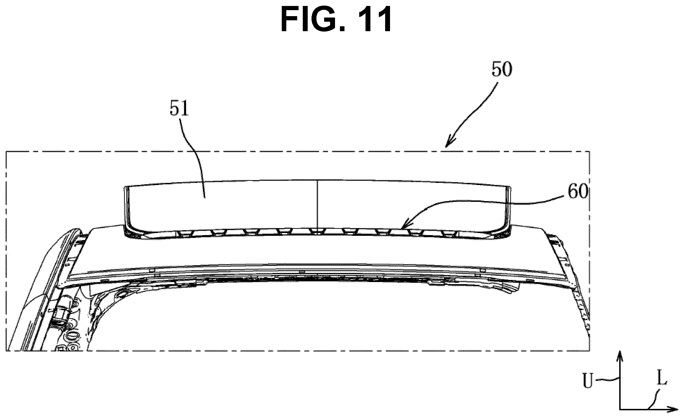

As illustrated in FIG. 11, in a case where a tilting-up operation is performed for a roof opening-closing unit 50 of Patent Literature 1, a glass panel 51 moves backward, and its posture is changed into a rear-side upward-inclined shape. A deflector 60 which is rotatable around a rear end portion of an arm portion as an axis is configured to rise (pop up) to an upper position than an opening 52 in response to backward movement of the glass panel 51.

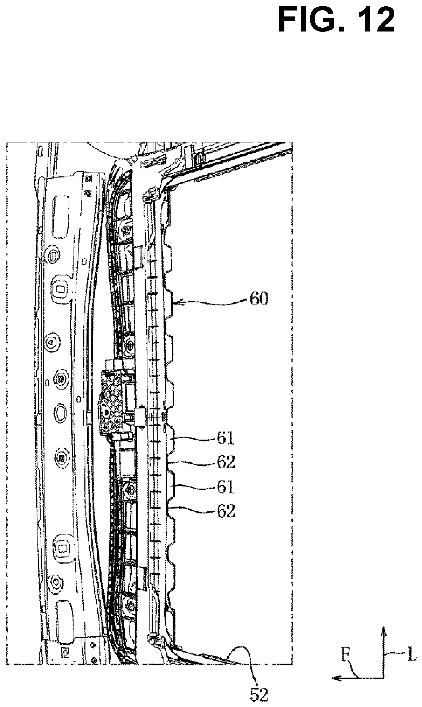

Thus, as illustrated in FIG. 12, projections 61 and recesses 62 of the deflector 60 come into the field of view of a seated occupant and might annoy the occupant and cause the occupant to feel discomfort in appearance.

Further, in a case of high-speed traveling, because force of an airflow flowing along the recesses 62 formed in the deflector 60 is strong, an airflow passing through the recesses 62 hit a rear-side edge portion of the opening 52, and a collision sound at a low frequency possibly occurs.

That is, it is not easy to realize both quietness and designability, regardless of a traveling state, in a vehicle including a roof opening-closing unit and a deflector.

An object of the present invention is to provide an upper vehicle-body structure for a vehicle or the like which is capable of realizing both quietness and designability of the vehicle.

### [Means for Solving the Problems]

An upper vehicle-body structure for a vehicle of claim 1 is an upper vehicle-body structure for a vehicle, including: a roof opening-closing unit which has a cover member being capable of opening and closing an opening formed in a roof panel; and a deflector which extends in a vehicle width direction along a front end edge portion of the roof opening-closing unit and is shifted to an upper position than the opening when an opening operation of the cover member is performed, characterized in that the deflector has plural raised walls having upper end portions with essentially the same heights, andplural recesses which are alternately disposed with the raised walls in the vehicle width direction and each extending in a vehicle front-rear direction, each of the recesses further comprises blocking wall portions protruding to a height not lower than the upper end portions of the raised walls and being provided in rear end portions of the plural recesses.

In this upper vehicle-body structure for a vehicle, the deflector has the plural raised walls having upper end portions with generally the same heights and the plural recesses which are alternately disposed with the raised walls in the vehicle width direction and each extend in the vehicle front-rear direction. Thus, a vortex flow is diffused by disturbing an airflow flowing along front wall portions of the deflector, and periodicity of the vortex flow can thereby be inhibited. The blocking wall portions protruding to a height not lower than the upper end portions of the raised walls are respectively provided in the rear end portions of the plural recesses. Thus, in high-speed traveling, an airflow passing through the recess can be restricted, and hitting by the airflow passing through the recess against a rear-side edge portion of the opening can be avoided. Accordingly, occurrence of a collision sound can be inhibited. Further, an uneven shape of the deflector can be prevented from coming into the field of view of a seated occupant, and discomfort to an occupant can be removed.

In the invention of claim 1, the invention of claim 2 is characterized in that a respective of the plural raised walls has a rear wall portion at its rear end portion, and an upper end of the blocking wall portion is set to essentially the same height position as an upper end of the rear wall portion. With this configuration, discomfort to an occupant can further be removed by aligning the upper ends of the blocking wall portion and the rear wall portion.

In the invention of claim 1 or 2, the invention of claim 3 is characterized in that the blocking wall portion is formed such that in a side view, a flow angle of leaving traveling air becomes larger than a flow angle of traveling air leaving from the rear wall portion. With this configuration, the flow angle of an airflow flowing along the blocking wall portion can be made different from the flow angle of an airflow flowing along the rear wall portion, and a vortex flow can further be diffused.

In the invention of claim 2 or 3, the invention of claim 4 is characterized in that rear faces of the blocking wall portion and the rear wall portion are configured to be flat. With this configuration, annoyance recognized by an occupant can be prevented.

In the invention of any one of claims 1 to 4, the invention of claim 5 is characterized in that the recess has a recess lower wall on a front side of the blocking wall portion and the recess lower wall is formed in a rear-side upward-inclined shape which is shifted upward toward a rear side. With this configuration, a collision sound caused by collision of an airflow flowing along the recess lower wall with the blocking wall portion can be inhibited.
In the invention of any one of claims 1 to 5, the invention of claim 6 is characterized in that the recess has a recess lower wall with which traveling air collides from the front, a recess rear wall portion provided on a rear side of this recess lower wall, and a blocking wall portion extending from an upper end portion of this recess rear wall portion in a rear-side upward-inclined shape, preferably wherein
in the recess lower wall, a lower-half portion is perpendicularly formed, and an upper-half portion is formed in a rear-side upward-inclined shape.
In the invention of any one of claims 1 to 6, the invention of claim 7 is characterized in that the blocking wall portion is configured such that its upper end is set to essentially the same height position as an upper end of the rear wall portion and the blocking wall portion blocks a recessed space formed between the neighboring raised walls, preferably wherein
the blocking wall portion is integrally formed to be in the same plane as the rear wall portion and the recess rear wall portion and is extended flat from an upper end portion of the blocking wall portionto a lower end portion of the recess rear wall portion.

In the invention of any one of claims 1 to 7, the invention of claim 8 is characterized in that the blocking wall portion is formed in a rear-side upward-inclined shape which is shifted upward toward a rear side. With this configuration, air resistance can be reduced by guiding an airflow colliding with the blocking wall portion to the rear.

### [Advantageous Effect of Invention]

An upper vehicle-body structure for a vehicle of the present invention can realize both quietness and designability by providing a blocking wall portion which restricts an airflow passing through a recess.

### [Brief Description of Drawings]

FIG. 1 is a perspective view of an upper vehicle-body structure for a vehicle according to a first embodiment.
FIG. 2 is a diagram corresponding to FIG. 1 in a case where a tilting-up operation is performed for a glass panel.
FIG. 3 is a side view of a vehicle of FIG. 2.
FIG. 4 is a bottom view of a front side of an opening of the vehicle of FIG. 2.
FIG. 5 is a perspective view of a deflector.
FIG. 6 is a front view of the deflector.
FIG. 7 is a cross-sectional view taken along line VII-VII in FIG. 2.
FIG. 8 is a cross-sectional view taken along line VIII-VIII in FIG. 2.
FIG. 9 is an enlarged view of principal components in FIG. 6.
FIG. 10 is a graph illustrating verification results.
FIG. 11 is a front view of a case where a tilting-up operation is performed in a vehicle according to related art.
FIG. 12 is a bottom view of a front side of an opening of the vehicle of FIG. 11.

### [Mode for Carrying Out the Invention]

An embodiment of the present invention will hereinafter be described in detail based on drawings.

The following descriptions describe examples where the present invention is applied to an upper vehicle-body structure for a vehicle but do not restrict the present invention, application thereof, or use thereof.

### [First Embodiment]

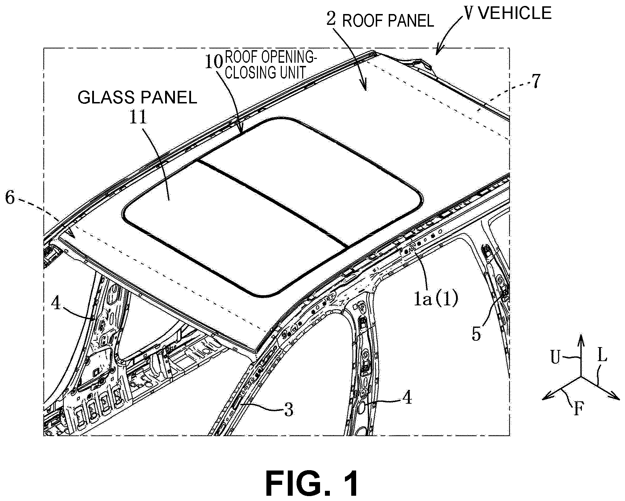

In the following, a first embodiment of the present invention will be described based on FIG. 1 to FIG. 10.

As illustrated in FIG. 1 to FIG. 3, a vehicle V is a four-door passenger vehicle including a pair of left and right roof side rails 1 extending in a front-rear direction, a roof panel 2 placed between the pair of roof side rails 1, a pair of left and right front pillars 3 respectively extending from front end portions of the pair of roof side rails 1 to a lower front side, a pair of left and right center pillars 4 respectively extending downward from intermediate portions of the pair of roof side rails 1, a pair of left and right rear pillars 5 respectively extending downward from rear end portions of the pair of roof side rails 1, a roof opening-closing unit 10 being capable of opening and closing an opening 2a formed in a roof panel 2, and so forth. In the following, descriptions will be made while in the drawings, the direction of an arrow F indicates the front in a vehicle front-rear direction, the direction of an arrow L indicates the left in a vehicle width direction, and the direction of an arrow U indicates the upper side in a vehicle up-down direction.

First, a description will be made about an outline configuration of the vehicle V according to the present invention.

The roof side rail 1 has an outer roof rail 1a, an inner roof rail (not illustrated) which forms a closed cross-section extending in the front-rear direction while cooperating with this outer roof rail 1a, and a roof rail reinforcement (not illustrated) as a reinforcement member which has upper end portion held between the outer roof rail 1a and the inner roof rail and demarcates the closed cross-section of the roof side rail 1 in the vehicle width direction. Both of left and right end portions of the roof panel 2 are joined, by welding, to vehicle-width-direction inner side ends of the pair of outer roof rails 1a.

As illustrated in FIG. 1 to FIG. 3, the pair of roof side rails 1 are coupled together in the vehicle width direction by a front header 6 extending in a left-right direction, a rear header 7 extending in the left-right direction, and first and second roof reinforcements (not illustrated) extending in the left-right direction. The first roof reinforcement is configured to couple the pair of roof side rails 1 together in positions close to connection portions between the roof side rails 1 and the center pillars 4, in other words, in a central position of the opening 2a in the front-rear direction. The second roof reinforcement is configured to couple the pair of roof side rails 1 together in positions close to connection portions between the roof side rails 1 and the rear pillars 5, in other words, in a back end position of the opening 2a in the front-rear direction.

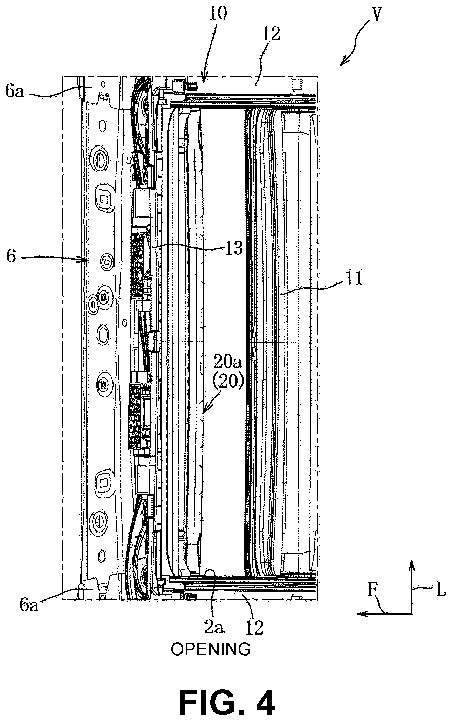

As illustrated in FIG. 4, the front header 6 has a pair of header gussets 6a formed of metal in both of left and right end portions and is connected with the pair of inner roof rails respectively via the pair of header gussets 6a. The front header 6 is formed to have a generally hat-shaped cross-section and forms a generally rectangular closed cross-section extending in the left-right direction while cooperating with a front end portion of the roof panel 2. Similarly to the front header 6, the rear header 7 is formed to have a generally hat-shaped cross-section and forms a closed cross-section extending in the left-right direction while cooperating with a rear end portion of the roof panel 2.

In the roof panel 2, the opening 2a in a generally rectangular shape in a planar view is formed from a close position to the front header 6 to the close positions to the connection portions between the roof side rails 1 and the rear pillars 5. In a close portion to an outer periphery of the opening 2a and around a lower surface of the roof panel 2, a front fixing plate extending in the left-right direction, a rear fixing plate, and a pair of left and right side fixing plates are arranged (all not illustrated). The roof opening-closing unit 10 is mounted on a vehicle body via those fixing plates formed of iron.

Next, the roof opening-closing unit 10 will be described.

The roof opening-closing unit 10 has a tilting-up function for performing a pop-up operation in which a transparent glass panel 11 (cover member) is opened and slid rearward and a front-half portion of the glass panel 11 is tilted in a rear-side upward-inclined shape, an opening function for performing an opening operation in which the glass panel 11 is opened and slid rearward and the front-half portion of the glass panel 11 is superposed on a rear-half portion, and a sunshade function as a shield against sunlight transmitted through the glass panel 11.

As illustrated in FIG. 1 to FIG. 4, the roof opening-closing unit 10 has, as main configuration elements, the glass panel 11 composed of the front-half portion and the rear-half portion, a pair of left and right side frames 12, a front-side member 13 coupling front end portions of the pair of side frames 12 together in the vehicle width direction, a shade device (not illustrated) coupling rear end portions of the pair of side frames 12 together in the vehicle width direction, a deflector mechanism 20, and so forth.

The side frame 12 is configured to have a generally U-shaped cross-section. This side frame 12 is formed of an aluminum alloy material by extrusion. The front-side member 13 is configured to have a generally U-shaped cross-section. This front-side member 13 is molded by using a synthetic resin material.

The shade device is formed into a generally rectangular cuboid shape with a sheet-shaped shade covering a lower surface of the glass panel 11, a roll-screen shade portion winding this shade in a drawable manner, an accommodation portion which is formed of iron and accommodates the shade and the roll-screen shade portion (all not illustrated), and so forth.

Next, the deflector mechanism 20 will be described.

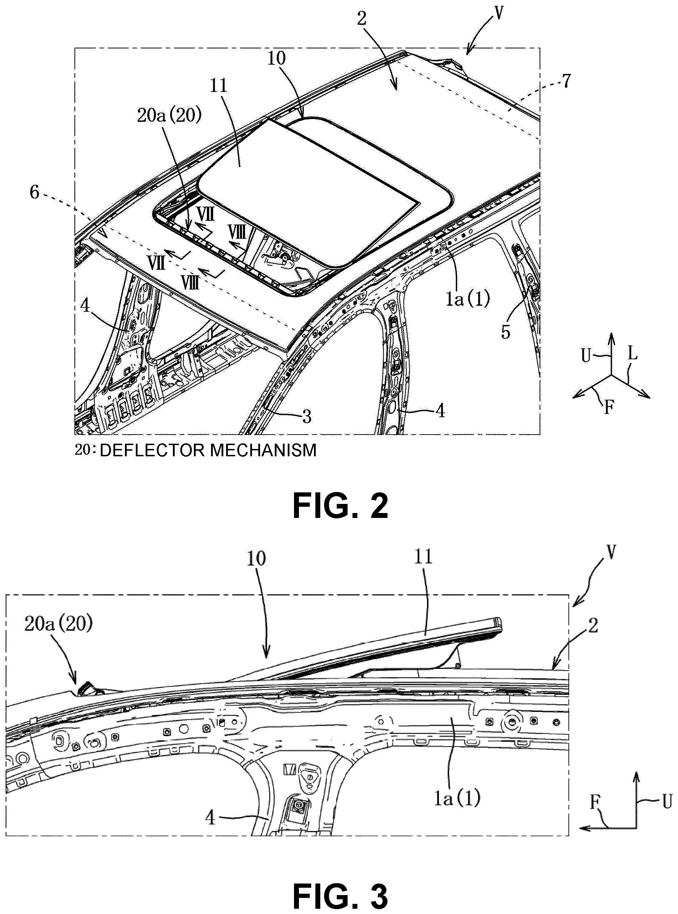

As illustrated in FIG. 2 to FIG. 6, the deflector mechanism 20 includes a deflector blade (hereinafter, referred to as deflector) 20a which is formed of a synthetic resin and extends in the left-right direction, a pair of left and right arm portions 20b which extend rearward from both of left and right end portions of this deflector 20a and each have a rear end portion pivoted rotatably with respect to the side frames 12, a link mechanism (not illustrated) which supports front end portions of the pair of arm portions 20b swingably with respect to the side frames 12, urging means (not illustrated) which always urges the pair of arm portions 20b upward, and so forth.

As illustrated in FIG. 1, when the glass panel is slid and closed, a lower surface of the front-half portion of the glass panel 11 presses the arm portion 20b downward against an urging force of the urging means. The deflector 20a is housed in a space on a lower side of the glass panel 11 and on an upper side of the front-side member 13.

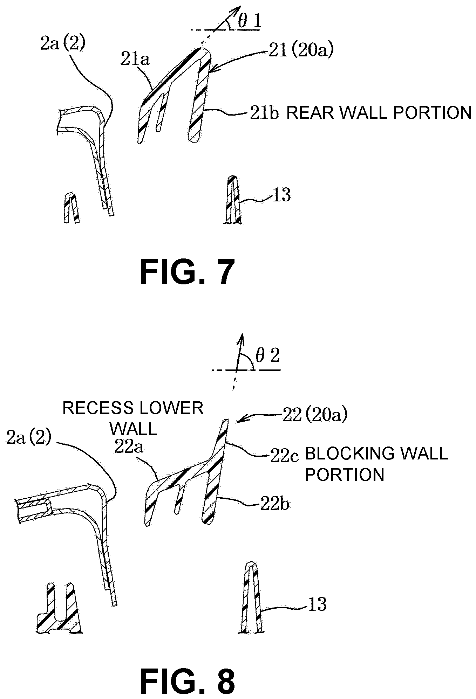

As illustrated in FIG. 7 and FIG. 8, when the glass panel 11 is opened and slid (the pop-up operation or the opening operation), the deflector 20a is released from position restraining by the glass panel 11. The deflector 20a is urged so as to rise upward along a front end edge portion of the roof opening-closing unit 10 (a front-side edge portion of the opening 2a) by the urging means and is moved to a risen position. The risen position of the deflector 20a is restrained by the link mechanism so as to be in an upper position than the opening 2a.

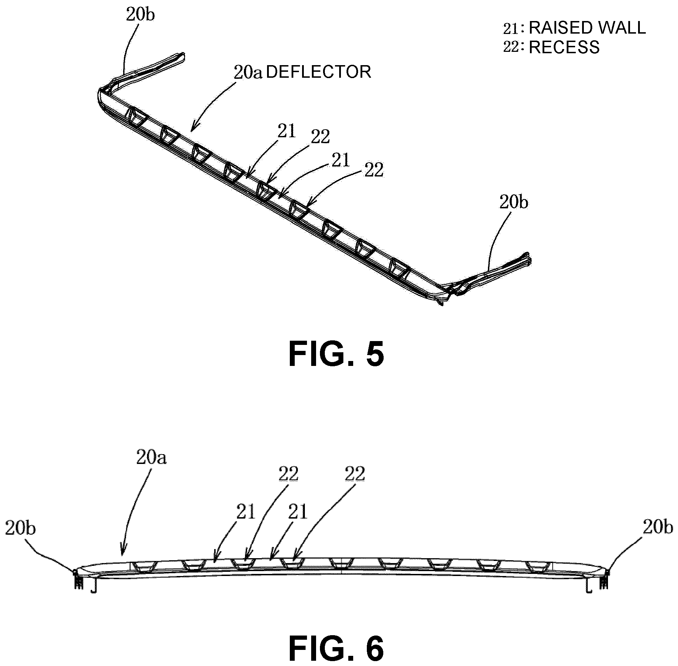

As illustrated in FIG. 5 and FIG. 6, the deflector 20a includes plural (for example, 10) raised walls 21 and plural (for example, 9) recesses 22 to neighbor those raised walls 21.

As illustrated in FIG. 7, the raised wall 21 has a front wall portion 21a with which traveling air collides from the front and a rear wall portion 21b integrally provided on a rear side of this front wall portion 21a.

In the front wall portion 21a, a lower-half portion is perpendicularly formed, and an upper-half portion is formed in a rear-side upward-inclined shape. Traveling air (airflow) flowing along the front wall portion 21a is guided to an upper rear side so as to flow at a flow angle θ1 with respect to a horizontal plane. The rear wall portion 21b is extended flat from an upper end portion (rear end portion) of the front wall portion 21a toward a lower front side.

As illustrated in FIG. 8, the recess 22 has a recess lower wall 22a with which traveling air collides from the front, a recess rear wall portion 22b integrally provided on a rear side of this recess lower wall 22a, and a blocking wall portion 22c extending from an upper end portion of this recess rear wall portion 22b in a rear-side upward-inclined shape.

In the recess lower wall 22a, a lower-half portion is perpendicularly formed, and an upper-half portion is formed in a rear-side upward-inclined shape. Traveling air flowing along the recess lower wall 22a is guided to an upper rear side so as to flow at a milder flow angle than the flow angle θ1. The recess rear wall portion 22b is extended flat from an upper end portion of the recess lower wall 22a toward a lower front side.

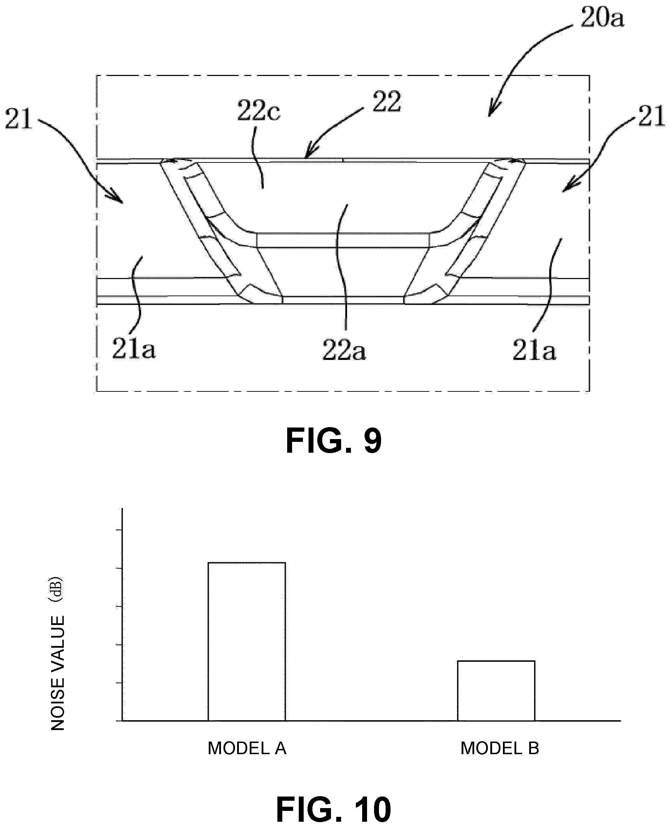

As illustrated in FIG. 9, the blocking wall portion 22c is configured such that its upper end is set to a generally same height position as an upper end of the rear wall portion 21b and the blocking wall portion 22c blocks a recessed space formed between the neighboring raised walls 21. This blocking wall portion 22c is integrally formed to be in the same plane as the rear wall portion 21b and the recess rear wall portion 22b and is extended flat from an upper end portion of the blocking wall portion 22c to a lower end portion of the recess rear wall portion 22b. Traveling air guided by the recess lower wall 22a is guided to an upper rear side so as to flow at a larger flow angle θ2 than the flow angle θ1.

Next, a description will be made about actions and effects of an upper vehicle-body structure for the vehicle V according to the embodiment of the present invention.

For describing the actions and effects, measurement using actual devices was performed.

A vehicle model A having a deflector mechanism including raised walls and recesses in which no blocking wall portion was formed and a vehicle model B having a deflector mechanism including raised walls and recesses in which a blocking wall portion was formed were made, and noise values (dB) in front-seat central positions were respectively calculated under conditions of a speed per hour of 100 km/h and a lateral wind of 0 m/s. Note that the same specification was set for the models A and B except the deflectors.

FIG. 10 illustrates verification results.

As illustrated in FIG. 10, it has been observed that the model B in which the blocking wall portions are formed inhibits and reduces noise, a so-called throbbing sound at a low frequency, by approximately 3.3% compared to the model A in which no blocking wall portion is formed.

A factor is considered to be that the blocking wall portions guide traveling air passing above recess lower walls to an upper rear side, an airflow passing through the recesses is thereby restricted, and an airflow hitting a rear-side edge portion of an opening (a front end portion of a glass panel) is decreased.

In the upper vehicle-body structure for the vehicle V according to the first embodiment, the deflector 20a has the plural raised walls 21 having upper end portions with generally same heights and the plural recesses 22 which are alternately disposed with the raised walls 21 in the vehicle width direction and each extend in the front-rear direction. Thus, a vortex flow is diffused by disturbing an airflow flowing along the front wall portions 21a and so forth of the deflector 20a, and periodicity of the vortex flow can thereby be inhibited. The blocking wall portions 22c protruding to a height not lower than the upper end portions of the raised walls 21 are respectively provided in rear end portions of the plural recesses 22. Thus, in high-speed traveling, an airflow passing through the recess 22 can be restricted, and hitting by the airflow passing through the recess 22 against a rear-side edge portion of the opening 2a (a front end portion of the glass panel 11) can be avoided. Accordingly, occurrence of a collision sound can be inhibited. Further, an uneven shape of the deflector 20a can be prevented from coming into the field of view of a seated occupant, and discomfort to an occupant can be removed.

The plural raised walls 21 respectively have the rear wall portions 21b in rear end portions, and the upper end of the blocking wall portion 22c is set to a generally same height position as the upper end of the rear wall portion 21b. Discomfort to an occupant can further be removed by aligning the upper ends of the blocking wall portion 22c and the rear wall portion 21b.

The blocking wall portion 22c is formed such that in a side view, the flow angle θ2 of leaving traveling air becomes larger than the flow angle θ1 of traveling air leaving from the rear wall portion 21b. Thus, the flow angle θ2 of an airflow flowing along the blocking wall portion 22c can be made different from the flow angle θ1 of an airflow flowing along the rear wall portion 21b, and a vortex flow can further be diffused.

Rear faces of the blocking wall portion 22c and the rear wall portion 21b are configured to be flat. Thus, annoyance recognized by an occupant can be prevented.

The recess 22 has the recess lower wall 22a on a front side of the blocking wall portion 22c, and the recess lower wall 22a is formed in a rear-side upward-inclined shape which is shifted upward toward a rear side. Thus, a collision sound caused by collision of an airflow flowing along the recess lower wall 22a with the blocking wall portion 22c can be inhibited.

The blocking wall portion 22c is formed in a rear-side upward-inclined shape which is shifted upward toward a rear side. Thus, air resistance can be reduced by guiding an airflow colliding with the blocking wall portion 22c to the rear.

Next, a description will be made about modifications in which the embodiment is partially changed.
1] In the embodiment, a description is made about an example where the opening 2a is formed from the close position to the front header 6 to the close positions to the connection portions between the roof side rails 1 and the rear pillars 5; however, the present invention is applicable regardless of the size of the opening 2a. For example, even when the opening 2a is formed from the close position to the front header 6 to the close positions to the connection portions between the roof side rails 1 and the center pillars 4, effects of the present invention can be provided.
2] In the embodiment, a description is made about an example where the upper end of the blocking wall portion 22c and the upper end of the rear wall portion 21b are in generally same height positions; however, it is sufficient that at least the upper end of the blocking wall portion 22c is in a height position not lower than the upper end of the rear wall portion 21b.
3] In the embodiment, a description is made about an example of the deflector 20a which rises upward by the urging means when the glass panel 11 is opened and slid; however, no particular condition is set for a driving mechanism of the deflector 20a. For example, the present invention may be applied to the deflector 20a which rises upward by an electric motor when the glass panel 11 is opened and slid.
4] Other than those, a person skilled in the art would be capable of realizing forms in which various changes are added to the embodiment or forms in which embodiments are combined together without departing from the gist of the present invention, and the present invention encompasses such changed forms.

### [Reference Signs List]

- 2: roof panel
- 2a: opening
- 10: roof opening-closing unit
- 11: glass panel
- 20: deflector mechanism
- 20a: deflector
- 21: raised wall
- 21b: rear wall portion
- 22: recess
- 22a: recess lower wall
- 22c: blocking wall portion
- V: vehicle

## Claims

1. An upper vehicle-body structure for a vehicle (V), comprising:
a roof opening-closing unit (10) which has a cover member (11) being capable of opening and closing an opening (2a) formed in a roof panel (2); and
a deflector (20a) which extends in a vehicle width direction along a front end edge portion of the roof opening-closing unit (10) and is shifted to an upper position with respect to the opening (2a) when an opening operation of the cover member (11) is performed,
**characterized in that**
the deflector (20a) has plural raised walls (21) having upper end portions with generally same heights, and plural recesses (22) which are alternately disposed with the raised walls (21) in the vehicle width direction and each of the plural recesses (22) extend in a vehicle front-rear direction, wherein
blocking wall portions (22c) protruding to a height not lower than the upper end portions of the raised walls (21) are provided in each one of a rear end portion of the plural recesses.

2. The upper vehicle-body structure for a vehicle (V) according to claim 1, **characterized in that**
each of the plural raised walls (21) has a rear wall portion (21b) at its rear end, and
an upper end of the blocking wall portion (22c) is set to essentially the same height position as an upper end of the rear wall portion (21b).

3. The upper vehicle-body structure for a vehicle (V) according to claim 1 or 2, **characterized in that** the blocking wall portion (22c) is formed such that in a side view, a flow angle of leaving traveling air becomes larger than a flow angle of traveling air leaving from the rear wall portion (21b).

4. The upper vehicle-body structure for a vehicle (V) according to claim 2 or 3, **characterized in that** rear faces of the blocking wall portion (22c) and the rear wall portion (21b) are configured to be flat.

5. The upper vehicle-body structure for a vehicle (V) according to any one of claims 1 to 4, **characterized in that**
the recess (22) has a recess lower wall (22a) on a front side of the blocking wall portion (22c), and
the recess lower wall (22a) is formed in a rear-side upward-inclined shape which is shifted upward toward a rear side.

6. The upper vehicle-body structure for a vehicle (V) according to any one of claims 1 to 5, **characterized in that**
the recess (22) has a recess lower wall (22a) with which traveling air collides from the front, a recess rear wall portion (22b) provided on a rear side of this recess lower wall (22a), and a blocking wall portion (22c) extending from an upper end portion of this recess rear wall portion (22b) in a rear-side upward-inclined shape, preferably wherein
in the recess lower wall (22a), a lower-half portion is perpendicularly formed, and an upper-half portion is formed in a rear-side upward-inclined shape.

7. The upper vehicle-body structure for a vehicle (V) according to any one of claims 1 to 6, **characterized in that**
the blocking wall portion (22c) is configured such that its upper end is set to essentially the same height position as an upper end of the rear wall portion (21b) and the blocking wall portion (22c) blocks a recessed space formed between the neighboring raised walls (21), preferably wherein
the blocking wall portion (22c) is integrally formed to be in the same plane as the rear wall portion (21b) and the recess rear wall portion (22b) and is extended flat from an upper end portion of the blocking wall portion (22c) to a lower end portion of the recess rear wall portion (22b).

8. The upper vehicle-body structure for a vehicle (V) according to any one of claims 1 to 7, **characterized in that** the blocking wall portion (22c) is formed in a rear-side upward-inclined shape which is shifted upward toward a rear side.
